# EUROPEAN PATENT APPLICATION

(11) **EP 2 154 449 A2**
(43) Date of publication of application: **17.02.2010**
(21) Application number: 09166919.2
(22) Date of filing: 31.07.2009
(51) Int. Cl.: F24J 2/54, H01L 31/042, F03D 9/00

(54) **A solar and /or a wind tracker plant**

(30) Priority: 04.08.2008 IT PR20080047
(71) Applicant: GET S.R.L., 43044 Lemignano - Collecchio (Parma) (IT)
(72) Inventor: Silleti, Angelo, 43044, LEMIGNANO - COLLECCHIO (PARMA) (IT)
(74) Representative: Corradini, Corrado

(57) **Abstract**

A solar and/or wind tracker plant (1), comprising a plurality of tracker devices (10) each comprising a base on which a vertical-axis fifth wheel is located, a rotating part of which bears a scaffold structure (3) for supporting a flat frame bearing photovoltaic panels (2), which flat frame is free to oscillate on the scaffold structure (3) about a horizontal axis, in which each tracker device (10) is connected to other tracker devices of the plant by means of a first and a second system of independent cables, of which a cable synchronously activates rotations of the scaffold structure (3) about a vertical axis thereof and another synchronously activates rotation of the flat frame bearing the solar panels about a horizontal hinge axis of the flat frame to the scaffold structure (3).

## Description

The invention relates to a solar and/or a wind tracker plant.

A first aim of the invention is to provide a solar tracker device which can support and orientate photovoltaic modules such that they can be constantly orientated perpendicular to the sun, such as at any given moment to obtain the greatest possible electrical energy and to maximise plant performance.

The device of the invention must govern and manage the positioning of a group of modules, while using only one motorisation source for movement thereof.

The useful surface of photovoltaic modules is influenced not only by solar radiation but also by wind action.

A second aim of the invention is to provide a tracker device which enables variations of wind pressure and speed in proximity of the useful surface of each module to be fully exploited by means of at least a turbine connected to a current generator.

In the latter case, the two energy sources, solar and wind, are independent of one another; thus it will not always be possible to contemporaneously collect the maximum solar and wind energy; however the management of the tracker can be advantageously programmed such as to maximise the energy which is produced overall.

More specifically the following cases can obtain:
with considerable light radiation and absence of wind, the orientation of the tracker is dictated by the condition of perpendicularity of the useful surface with the light radiation;
at night, with a significant presence of wind the orientation of the tracker is dictated by the objective of collecting the maximum wind energy possible;
with a cloudy sky and a significant presence of wind the tracker can perform adjustments in order to optimise the energy which is produced overall.

The aims of the invention are obtained with a device having the characteristics recited in the independent claim.

The dependent claims relate to characteristics which improve the efficiency of the invention.

The constructional and functional characteristics of the invention will better emerge from the detailed description that follows, which relates to two different preferred embodiments given by way of non-limiting example and illustrated in the accompanying figures of the drawings.
Figure 1 is a view from above of a plant according to the invention, comprising a group of tracker devices;
figure 2 is a single solar tracker device with the respective means for activating seen in a side view;

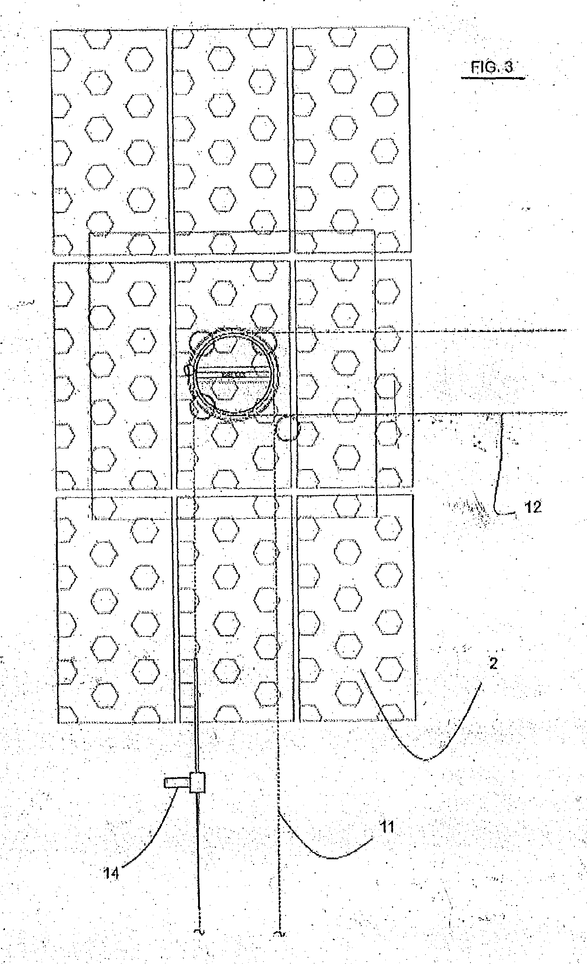

figure 3 is a view from above of a tracker device which can be activated using a main cable;
figure 4 is a side view of a single tracker device;
figure 5 is a view from above of a tracker in North-South arrangement;
figure 6 is a view from above of the tracker in East-West arrangement;
figure 7 is the arrangement of two contiguous tracker devices in the East-West arrangement;
figure 8 is an arrangement of two contiguous tracker devices with a North-South rotated arrangement;
figure 9 is a view from above of the plant of the invention with cables for inclination connected;
figure 10 illustrates the panel in flat and inclined configuration;

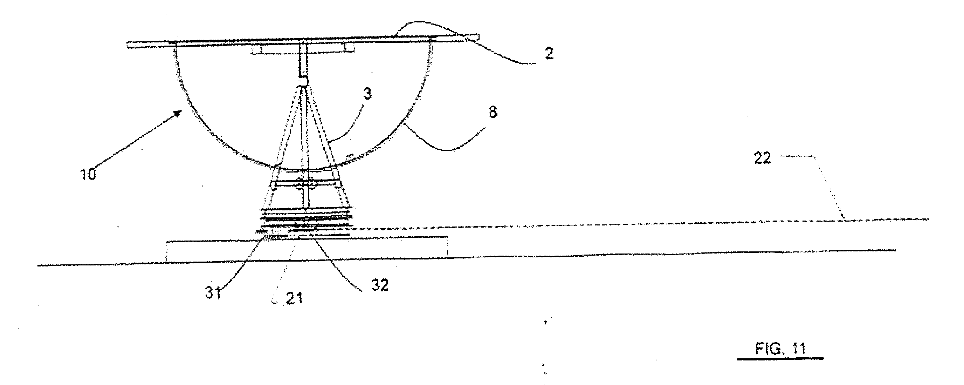

figure 11 is a side view of a tracker with the cables for inclination;
figure 12 is a view from above of two connected trackers with the cables for inclination in a non-inclined configuration;
figure 13 is a view from above of two connected trackers with the cables for inclination in an inclined configuration;
figure 14 is a detail from above of the single tracker and the arrangement of the main and second cables for inclination;
figure 15 illustrates the scaffold structure of the photovoltaic panel-bearing support;
figure 16 is a detail of the lower part of the scaffold, i.e. the part which will be fixed to the base;
figure 17 is a further embodiment of the tracker device in which there is a turbine group for exploitation of wind energy conveyed by the panel itself.

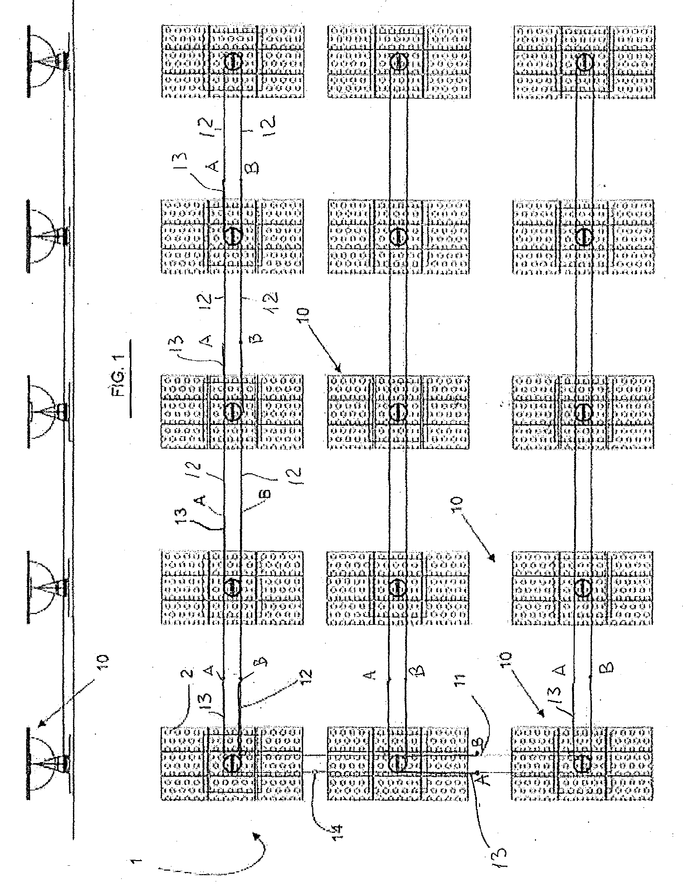

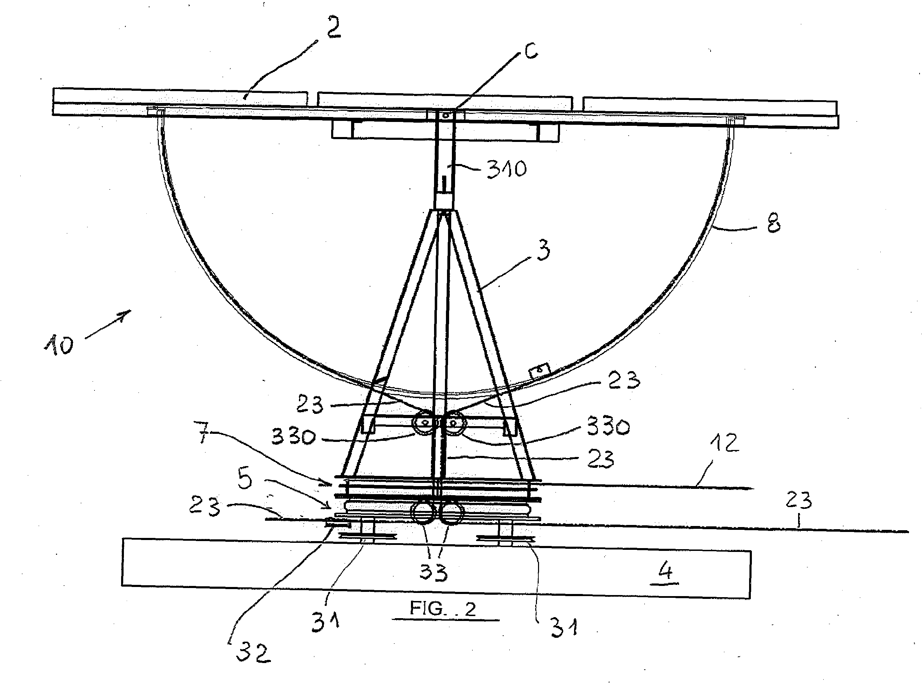

With reference to figures1, 2, 14, 15 and 16, the tracker device 10 comprises a base 4 which supports a vertical-axis and horizontal fifth wheel 5.

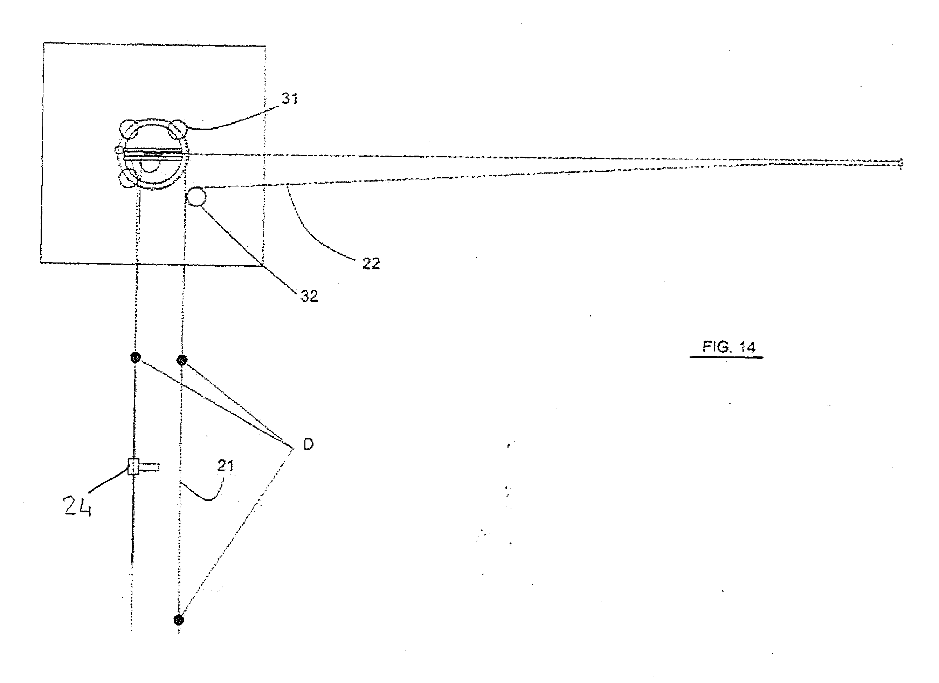

The fixed part of the fifth wheel 5 bears three vertical-axis pulleys 31, being coplanar and rotating on pivots 51 (see figure 14), as well as at least a vertical-axis pulley 32 and two further horizontal-axis pulleys 33 the grooves of which are tangential to the straight line passing through the grooves of the pulleys 31.

The mobile part of the fifth wheel 5 supports a dihedron-shaped scaffold 3, which in proximity of the base bears two further pulleys 330 that are coplanar with and located as a same distance from the pulleys 33. At the vertex of the dihedron the scaffold 3 extends into a vertical frame 310 which superiorly bears the rectangular and vertical frame 2 bearing the solar panels.

The frame 2 bears a vertical semi-ring 8 provided with a groove 80 that is coplanar to the grooves of the pulleys 330.

The rotating ring of the fifth wheel 5 comprises two circular grooves 7, respectively 71 and 72, the function of which will be more fully explained herein below.

The devices 10 are disposed in the matrix arrangement illustrated in figure 1.

The first device 10, upper on the left in figure 1, is connected to the last device 10, lowest on the left in figure 1, by means of a first cable 11 which is ring-wound and closed on the respective grooves 71.

All the first devices 10 on the left in figure 1 are each connected to the last device on the right of the same row by a second cable 12, closed and ring-wound on the respective grooves 72.

The two parallel branches of the cables 11 and 12 are branch-connected to each of the intermediate devices 10 of the same row (figure 1) by a tract of cable 13 the ends of which are respectively fastened at A and B to the respective cable 11, 12 and which is wound on the grooves 71 or 72 of the respective device.

The cable 11 is associated to an actuator 14, for example a jack, which causes a movement in both directions.

In this way all the devices of the matrix group illustrated in figure 1 are constrained to rotate together about the vertical axis of the respective fifth wheels 5.

In each device 10 the rotations about the horizontal axis C of the frame 2 bearing the solar panels are commanded as follows.

All the head devices, i.e. the devices of the alignment on the left of figure 1, are connected by a cable 21 which is ring-wound and tensioned between the three pulleys 31.

Downstream and upstream of each device, two tracts of cable 23 are anchored to the cable 21, which tracts of cable 23 are tangential to the pulley 32 and are returned by the pulleys 33 and 330 and are respectively fixed to the ends of the half-ring 8.

Also anchored to the cable 21, at point D, are secondary cables 22 returned by the pulleys 32, in a number which is equal to the number of head devices, each of which serves, similarly to the cable 21 of the head alignment, all of the devices of each alignment which perpendicularly terminates at the head alignment.

In this way the cable 21 and all the secondary cables 22 move in synchrony, changing by a same measure the orientation of the panels 2 of all the devices in the group.

The cable 21 is activated, together with all the secondary cables 22, by an actuator 24, such as a jack.

The jacks 14 and 24, are operated by a computer which processes, in a known way, the direction signals of the light radiation and the wind.

The functioning of the whole device and other functional characteristics of the device will emerge more clearly from the following description.

As mentioned, 1 denotes in its entirety a solar tracking plant, object of the present invention, of a type comprising a plurality of tracker devices 10 and a support structure 3 for photovoltaic panels 2 superiorly located thereon.

More specifically, in the illustrated embodiment the photovoltaic panels 2 are arranged substantially in a matrix fashion of N and M components.

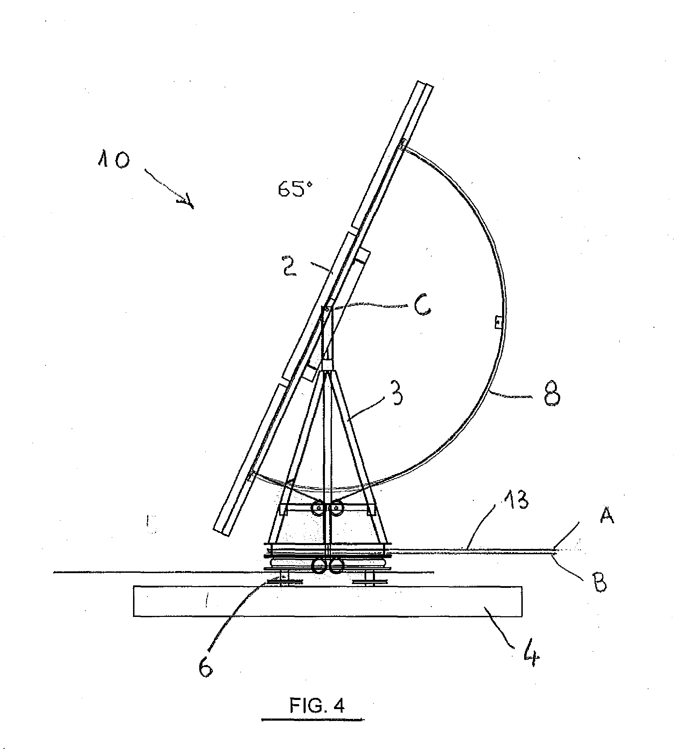

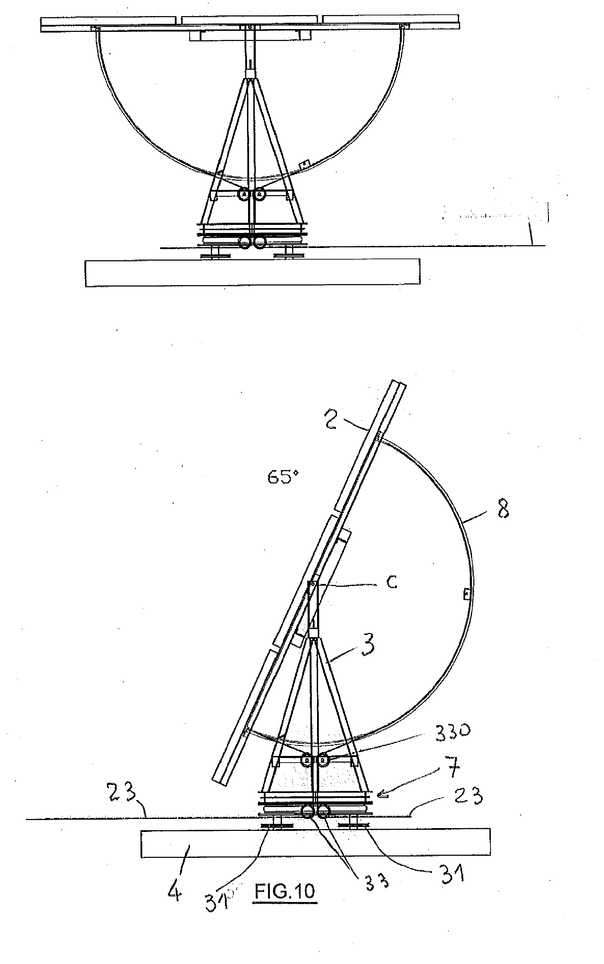

The tracker device 1 is structured and dimensioned to enable two rotary movements which are independent of one another:
an inclining movement (figure 10) according to an axis which is substantially coplanar to the base and passing through the hooking hinge C of the panel 2 to the scaffold 3 structure;
a rotational movement (figure 4) according to an axis which is substantially perpendicular to the base and passing through the hooking hinge C of the panel 2 to the scaffold 3 structure.

Each structure 3 rests on the fifth wheel 5 which in turn, via the supports 6, is anchored to the base 4 of the solar and wind tracker 10.

The fifth wheel 5 enables a rotational movement of each structure 3 of the tracker 10.

A circular double seating is present on the lower part of the scaffold 3 structure, and the main cable 11 is passed through the lower groove 71 while the secondary cable 12 passes through the other groove; a full winding of one or more cables is made on the seating, as will be more clearly described herein below.

A cable 13 of the single rotational tracker is fixed to the circular seating c and thus to the scaffold 3 by means of a stop: the heads A and B of the cable 13 are connected to a further cable 11 and/or 12 from which they receive motion as will be described herein below.

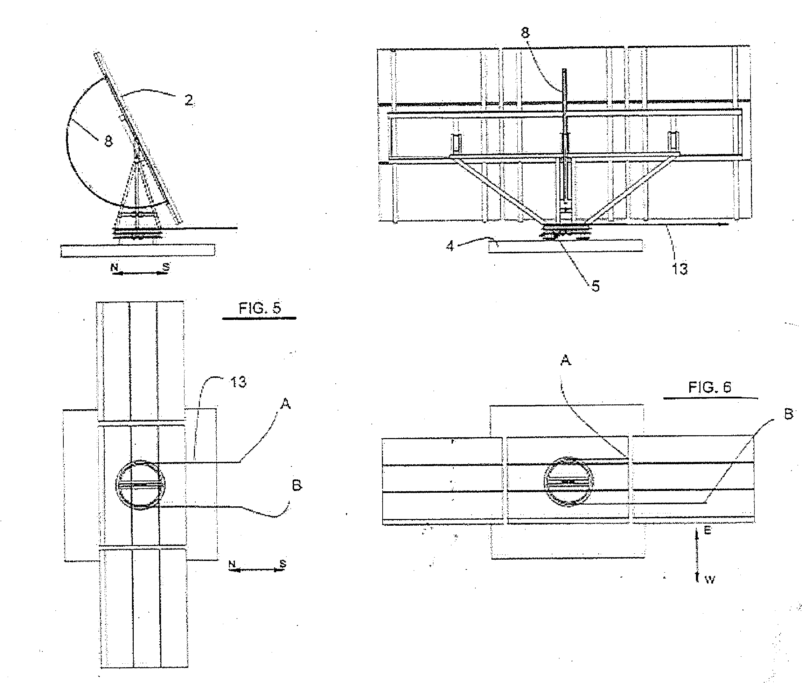

By applying a force to a head of the cable the tracker 1 is rotated, and tends towards an east-west orientation if it was previously in a north-south orientation, and vice versa (see figure 6).

The above relates to the rotational movement of the single tracker, independent of the inclining movement; the commonality of the motion between the various trackers is given by the three-level cable system described herein below.

The scaffold 3 structure bears a group of circular seatings and/or pulleys with which the above-described cables 11, 12,13 can be returned, but also further cables 21, 22, 23 for inclining, described herein below, which enable a wide range of activation of the plant 1 to be attained.

The seatings 7 for cables 11, 12, 13 have already been described; in the detail of figure 4 it can be observed that the cable 13 of the single tracker 10 occupies the same seating 7 as the secondary cable 12 so that the secondary cable 12 passes free and tangential of some trackers 10.

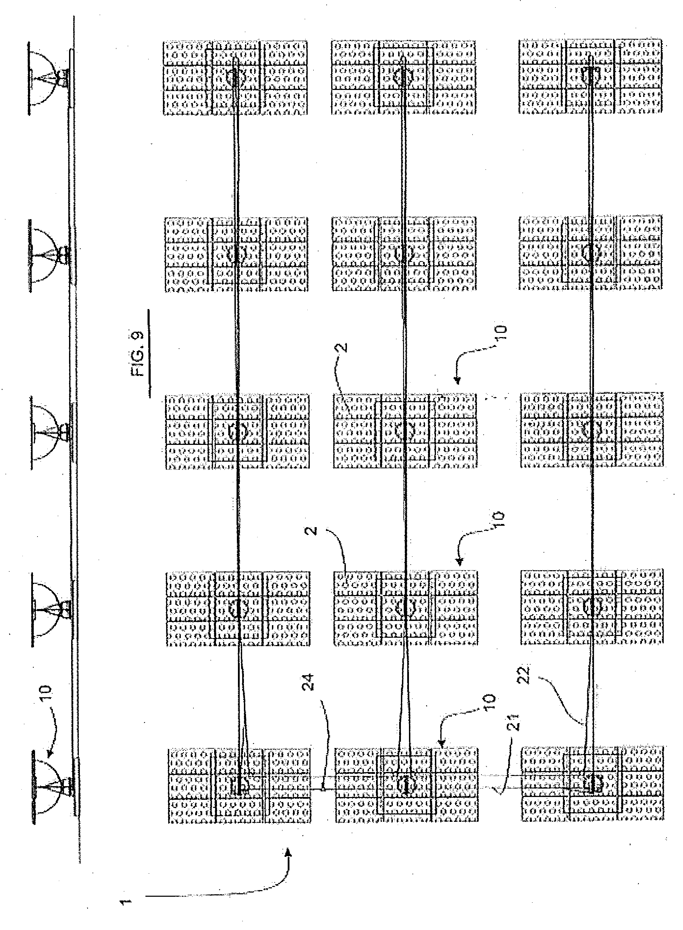

As for the cables 21, 22, 23, destined to cause the inclination, their arrangement is shown in figures 4, 9 and 10 and more precisely the presence of a series of guide pulleys 31, 32, 33 respectively of the main cable 21, the secondary cable 22 and 23, for inclining the single tracker 10.

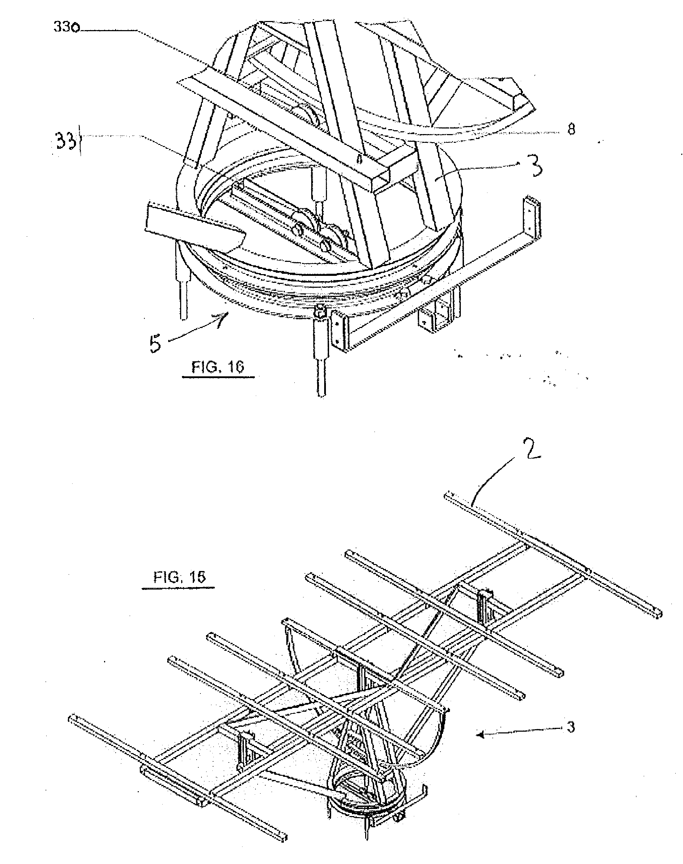

With particular reference to figures 15 and 16, note that the pulleys 33, 330 are four in number, two for the right cable 23 and two for the left cable, while two of them 330 are installed in the frame 3 and are therefore mobile with respect to the base 4, and the other, lower pulleys 33 are installed in the lower part of the fifth wheel 5 and for this reason are fixed with respect to the base 4.

Each main cable 11, 21 for rotation and inclination is moved by a corresponding motorising jack 14, 24 which independently manages the movement as the main cables are ring-wound with ends thereof connecting to the screw of the jack, such that the translation of the screw causes a displacement of the main cable 11, 21.

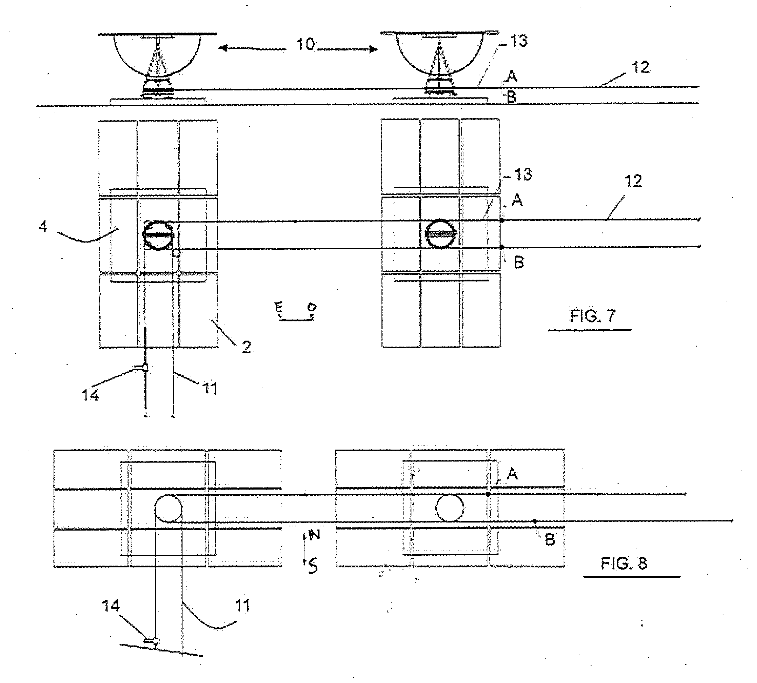

In order to achieve simultaneous rotation of all the panels 2 using only one means for motorisation 14, 24, a cable system articulated on three levels is used:
a main cable 11 ring-wound on M structures 3 which is moved directly by the jack 14;
a secondary cable 12 which is ring-wound, embracing N trackers and being moved by one of the scaffolds 3 connected to the main cable 11;
a cable 13 of a single scaffold, ring-wound but open on the main cable or the secondary cable; figures 1, 7 and 8 show two ends A and B which are not closed upon themselves but which are anchored to the secondary cable or the main cable according to the position of the tracker of the plant.

The main cable 11 is housed in the lower part of the cable seating of the scaffold 3, is turned in the seating and is anchored to the seating by a stop; this anchoring of the main cable to the tracker by means of a stop is done in order to prevent slippage and to transfer the drive of the cable to the tracker and vice versa.

As mentioned herein above, the main cable 11 is closed and ring-wound and its ends are connected to a threaded bar or screw which is commanded by a jack 14; the translation of the screw causes the displacement of the main cable and the rotating of the scaffolds connected thereto.

The secondary cable 12 is housed in the upper part of the cable seating of the scaffold, is turned in the seating and is anchored thereto by means of a stop, which is to prevent slippage.

The secondary cable 12 is ring-wound and the only tracker 10 about which it is turned and to which it is anchored by a stop is the tracker 10 connected to the main cable; the rotation of the tracker 10 causes a displacement of the secondary cable; the secondary cable only moves tangentially of the other trackers and therefore without transmitting motion.

The cable 13 of the single tracker is housed in the upper part of the cable seating of the scaffold; it is turned in the seating and is anchored thereto by a stop.

The ends A and B of the tracker cable are anchored by clamps to the secondary cable, and take motion therefrom.

The functioning description of the invention is as follows.

The rotation of a scaffold/tracker changes due to rotation from a first direction, for example north-south, to a second direction, for example east-west, by the action of the jack 14 which translates the screw; the screw draws the main cable 11 and thus rotates the trackers, i.e. the scaffolds 3, embraced by the main cable itself.

The secondary cable 12 is moved by the trackers, which thus rotates all the trackers connected to the secondary cable.

The elements of the tracker 10 enabling it to be inclined will now be described.

In order to incline all the trackers 10 simultaneously using a single motorisation, a cable system articulated on three levels is used:
a main cable 21, connected ring-wound on M trackers, taking motion directly from the jack;
a secondary cable 22; this is connected ring-wound and embraces N trackers, taking motion from one of the M trackers 10 connected to the main cable 21;
a single cable 23 for each single tracker 10; this is ring-wound and open, connected to the main cable 21 or the secondary cable 22.

The main cable winds idle on the pulleys 31 located between the base 4 and the fifth wheel 5.

The main cable 21 is ring-wound and ends thereof are connected to the screw of the jack; the translation of the screw causes a displacement of the main cable.

The secondary cable 22 is ring-wound on the pulleys 32 located higher than the main cable pulley.

The ends of the secondary cable 22 for the inclination are anchored to the main cable 21 as shown in figure 14, with reference letter D.

The secondary cable 22 is not connected to any tracker directly, but passes below the fifth wheel 5 and the seating 7 of the trackers 10.

The housing of the two pieces of cable 23 for the inclination is as follows: the structure of the solar tracking device 1 is formed by an upper part which supports the photovoltaic modules 2 and which can rotate about a hinge C.

A profiled calendered guide 8 (semi-ring) is solidly constrained to the structure (figure 10), on which rest and extend a piece of cable A on one side and a piece of cable B on the other side, of the cables of the single inclining tracker. An end of each piece of cable is anchored to the calendered guide, while the other end is fixed to a main cable from which it takes its motion.

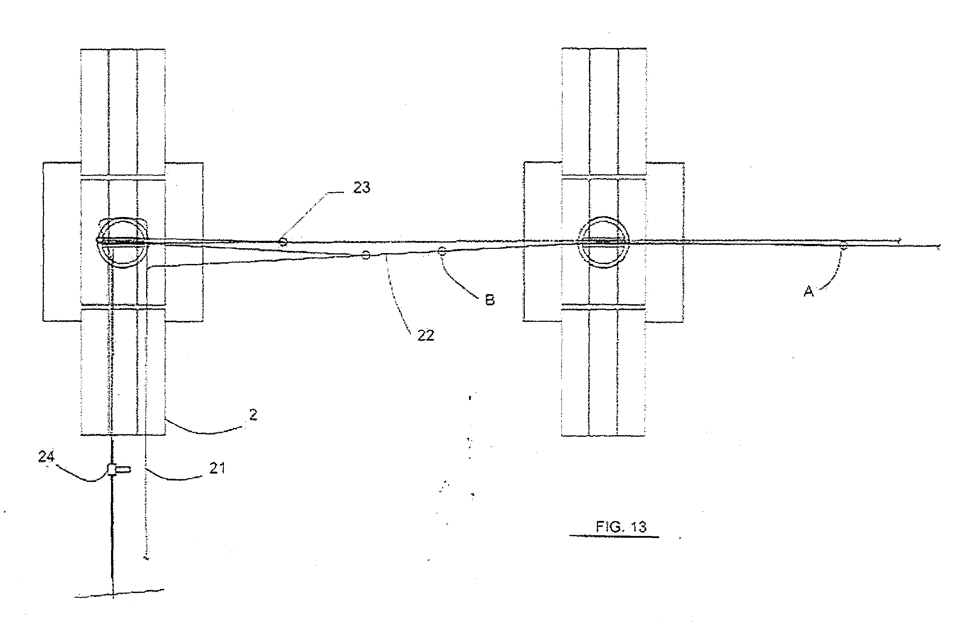

When the piece of cable A is pulled, the tracker moves into the position of maximum inclination, as illustrated in figure 13.

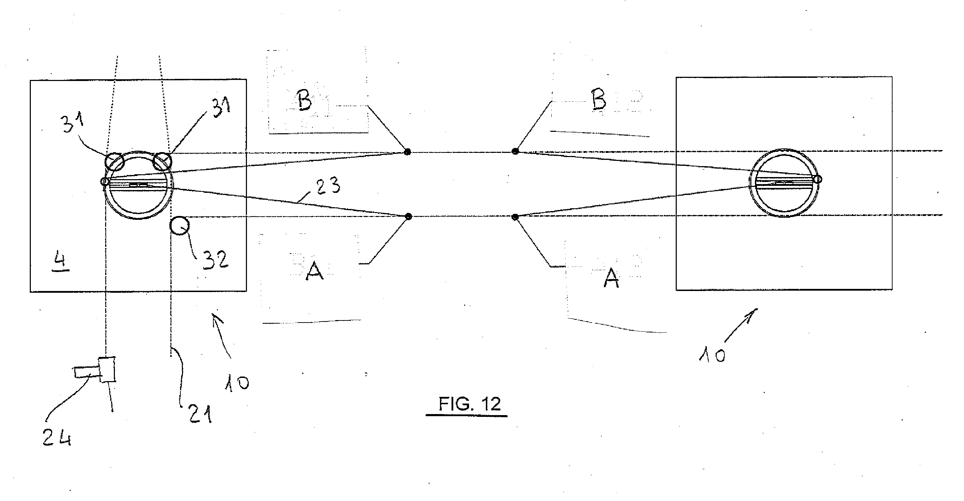

When the piece of cable B is pulled, the tracker moves into the rest position at 0°, as illustrated in figure 12.

The locating of the seatings 7 and/or the pulleys 31, 34, 33 on the scaffold 3 structure of each tracker 10 results in independence of inclining motion from rotational motion.

The variation of the inclination of the single panel 2, for example from 0° to 65°, is done by means of the action of the respective jack 24 which generates the translation of the screw; this draws the main cable to which the secondary cable is connected.

All of the connected trackers take motion from the secondary cable 22, thus rotating simultaneously.

All of the cables 23 of the single tracker are anchored to the secondary cable by means of clamps.

Each single device 10 thus bears a photovoltaic panel 2 supported by a relative scaffold 3 structure.

By means of a special arrangement of the pulleys, among which the double circular seating for the passage of one or more turns of the cables, main and secondary, there are two rotational movements, independent of one another, as follows:
an inclining movement according to an axis which is substantially parallel to the base and passes through the hinge of the panel to the scaffold;
a rotational movement according to an axis which is substantially perpendicular to the base and passes through the hinge C of the panel to the scaffold.

Each inclining and rotational movement is managed independently by a respective motorisation.

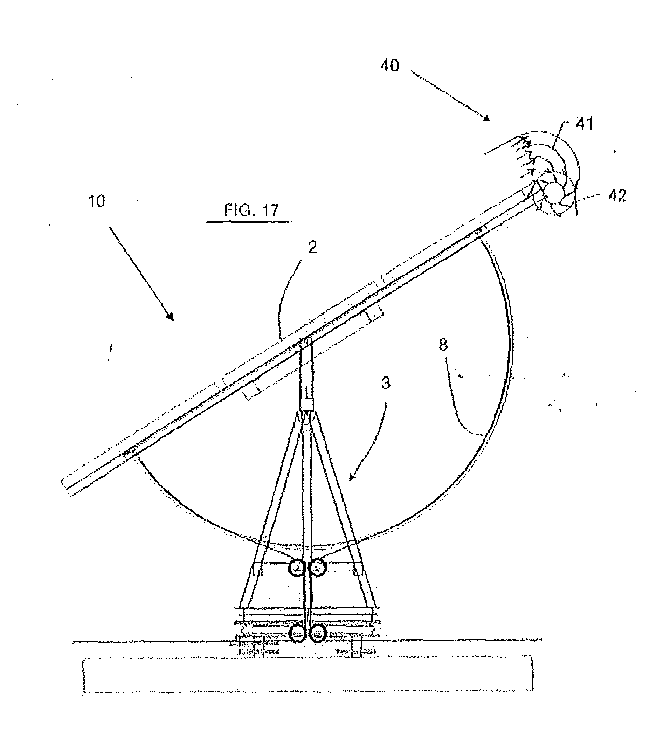

As described herein above, the plant 1 can also be used to exploit the pressure and velocity variation in the wind in proximity of the surface, as illustrated in an example of figure 17.

A turbine group 40 having a fixed part 41 (distributor or stator) and a mobile part 42 (impeller or rotor) is solidly constrained on each tracker device 10, and precisely on the structure which supports each photovoltaic panel.

The moving fluid enters the distributor 41 and acts on the blades of the rotor part 42, setting it in rotation and rendering kinetic energy thereto such that the energy is transformed into mechanical energy.

One or more current generators are associated to the turbine group 40 to convert the mechanically energy into available electrical energy.

The position relative to the useful surface represented by photovoltaic modules and the inclination by means of rotation about the rotation axis of the rotor of the turbine group can be varied by an adjusting device, such as to maximise production of wind energy.

Together with the device of the invention, the management system of the tracker is also part of the invention, such as for example management and positioning software which directs the trackers and/or the turbine groups such as to direct the gathering of solar rather than wind energy.

The system of solar trackers as described herein above and claimed herein below can be positioned in the open, in the sea, or even in a piled situation, i.e. on unlimited superposed bearing frames. In the latter case they will be horizontally realised (low, but long) with the same cable devices and with the single motorisation.

This arrangement will increase performance, which at present in single-panel, of the spaces, and will increase the channelling of the wind (nocturnal function) as it will have a greater "sail" effect.

## Claims

1. A solar and/or wind tracker plant (1), comprising a plurality of tracker devices (10) each comprising a base on which a vertical-axis fifth wheel is located, a rotating part of which bears a scaffold structure (3) for supporting a flat frame bearing photovoltaic panels (2), which flat frame is free to oscillate on the scaffold structure (3) about a horizontal axis, **characterised in that** each tracker device (10) is connected to other tracker devices of the plant by means of a first and a second system of independent cables, of which a cable synchronously activates rotations of the scaffold structure (3) about a vertical axis thereof and another synchronously activates rotation of the flat frame bearing the solar panels about a horizontal hinge axis of the flat frame to the scaffold structure (3).

2. The plant of claim 1, **characterised in that** the tracker devices are arranged according to a rectangular matrix in which parallel and perpendicular alignments of the trackers are identified.

3. The plant of claim 1, **characterised in that** each tracker device comprises a base (4) fixed to a ground surface, to which base (4) a fixed ring of the fifth wheel (5) is fixed, to which fixed ring a trio of vertical-axis pulleys 31 is fixed, a further vertical-axis pulley (32) is fixed, and a pair of horizontal-axis pulleys (33) is fixed, having a tangent in common with the further vertical-axis pulley (32).

4. The plant of claim 3, **characterised in that** the scaffold structure (3) is fixed to a mobile upper ring of the fifth wheel (5), which upper ring comprises two circular grooves (7) and bears a pair of pulleys (330), facing grooves of which pair of pulleys (330) are located above facing grooves of the pair of horizontal-axis pulleys (33).

5. The plant of claim 4, **characterised in that** a vertical semi-ring derives inferiorly from the flat frame bearing the photovoltaic panels (2), which vertical semi-ring exhibits a groove which is coplanar with the grooves of the pulleys (330).

6. The plant of claim 1, **characterised in that** the first cable system comprises a first closed cable ring-wound on grooves (7) of end devices of at least an alignment of devices, and a second closed cable ring-wound on the grooves (7) of end devices of at least an alignment of devices which is perpendicular to the preceding alignment of devices.

7. The plant of claim 6, **characterised in that** the intermediate devices of each alignment are connected to the first cable or to the second cable by means of a third tract of open-ring cable wound in the grooves (7), ends of which open-ring cable are fastened to the first cable or to the second cable.

8. The plant of claim 6, **characterised in that** at least the first cable of the first cable system is connected to an activating device.

9. The plant of claim 1, **characterised in that** the second cable system comprises a main cable which is closed and ring-wound about the pulleys (31) of the end devices of at least an alignment of devices, and at least an open-ring secondary cable, ends of which are fastened to the two branches of the main cable, and after looping on the pulley (32) the secondary cable is wound on the pulleys (33) of the most distant device of at least an alignment of devices which is perpendicular to the preceding at least an alignment of devices.

10. The plant of claims 1 and 9, **characterised in that** the second cable system comprises, for each of the devices, at least a third ring-wound cable (23) which at an end thereof branches from the main cable or the secondary cable, and at an opposite end thereof branches from the half-ring fixed to the frame of the solar panels, after having been wound around the pulley (33) and the pulley (330), **in that** order.

11. The plant of claim 9, **characterised in that** the main cable is connected to an activating device.
